# EUROPEAN PATENT APPLICATION

(11) **EP 4 686 223 A1**
(43) Date of publication of application: **28.01.2026**
(21) Application number: 24190605.6
(22) Date of filing: 24.07.2024
(51) Int. Cl.: H04R 3/00, G06F 3/01, G10L 21/16, H04R 5/02

(54) **METHOD AND CONTROL CIRCUIT FOR CONTROLLING A TACTILE SPEAKER**

(71) Applicant: Harman Becker Automotive Systems GmbH, 76307 Karlsbad (DE)
(72) Inventor: von Saint-George, Matthias, 76327 Pfinztal (DE); BRACHT, Daniel, 76139 Karlsruhe (DE)
(74) Representative: Kraus & Lederer PartGmbB

(57) **Abstract**

A method (200) of controlling a tactile speaker (124, 126) comprises receiving (202) an audio signal (300) and generating (204) at least one filtered audio signal (320-328) by filtering the audio signal (300) with at least one bandpass filter (310-318) having a defined frequency band. In addition, at least one shifted audio signal (342-348) is generated (206) by frequency shifting the at least one filtered audio signal (322-318) depending on the defined frequency band to a shifted frequency lower than a frequency of the defined frequency band. The tactile speaker (124, 126) is controlled (212) based on the at least one shifted audio signal (342-348).

## Description

### Technical Field

The present application relates to the field of tactile speakers, in particular to methods and control circuits for controlling a tactile speaker, e.g. in a seat of a vehicle such as a car, truck, train or aircraft.

### Background

Tactile (loud)speakers, also known as tactile transducers or bass shakers, are devices that convert audio signals into physical vibrations. Unlike traditional speakers that produce sound waves to be heard, tactile speakers create vibrations that can be felt through touch. These vibrations are typically transmitted through surfaces such as floors, chairs, or other structures to which the tactile transducers are attached.

The functioning of tactile speakers begins with the reception of an audio signal, usually from a sound system or amplifier. For example, a tactile speaker may be driven by a low-pass filtered music signal. The internal mechanism of the tactile transducer then converts this audio signal into mechanical energy. This mechanical energy generates vibrations whose strength and frequency correspond to the characteristics of the audio signal. These vibrations are then transmitted to the surface the tactile speaker is mounted on, allowing the user to feel the sound.

Tactile speakers have a wide range of applications across various fields due to their ability to enhance sensory experiences. In home theatres and entertainment systems, tactile speakers add a physical dimension to sound, making movies, music, and video games more immersive. Users can feel low-frequency sounds like explosions, engine roars, or deep bass lines, creating a more engaging experience. Additionally, tactile speakers can provide a powerful bass experience without the need for high volume, reducing noise pollution and preventing disturbance to others.

In the gaming industry, tactile speakers enhance gameplay by allowing gamers to feel in-game actions such as gunfire, explosions, or vehicle movements, creating a more immersive and realistic experience. They provide physical feedback during gameplay, which can enhance reaction times and overall enjoyment. For virtual reality (VR) and augmented reality (AR) systems, tactile speakers offer enhanced sensory feedback, making virtual environments feel more real by providing physical sensations that correspond to virtual events.

Tactile speakers are also valuable in music production and studios, where they allow musicians and producers to monitor low-frequency sounds with precision, ensuring better control over bass elements during mixing and mastering processes. In vehicles and simulators, tactile speakers can simulate the feeling of road textures, engine vibrations, and other environmental feedback, enhancing training realism in driving or flight simulators. In luxury vehicles, they provide an enhanced audio experience without disturbing other passengers.

Additionally, tactile speakers offer significant benefits for accessibility, particularly for individuals with hearing impairments. By providing an alternative way to experience sound through vibrations, tactile speakers enable those with hearing impairments to enjoy music, movies, and other audio content.

### Summary

Therefore, a need exists for advanced techniques of controlling tactile speakers. In particular, there is a need for extended use and improved control of tactile speakers.

This need is met by a method of controlling a tactile speaker and a control circuit for controlling a tactile speaker as defined in the independent claims. The dependent claims define embodiments.

A method of controlling a tactile speaker, for example a tactile speaker in a seat of a vehicle, is provided. The method is performed by a control circuit. The control circuit may comprise a processor, for example a general purpose processing unit or a digital signal processing unit, and a memory for storing software and audio data. The software may comprise instructions configured to perform the method steps described herein upon execution by the processor. In various examples, the control circuit may comprise analogue electronic components, for example filters, frequency shifters, modulators and the like. The method comprises receiving an audio signal. The audio signal may be received as an electrical audio signal or an optical audio signal from an audio source, for example a radio or an entertainment system of a vehicle. According to the method, at least one filtered audio signal is generated by filtering the audio signal with at least one bandpass filter having a defined frequency band, i.e. a defined passband. Furthermore, according to the method, at least one shifted audio signal is generated by frequency shifting the at least one filtered audio signal depending on the defined frequency band to a shifted frequency lower than a frequency of the defined frequency band. The tactile speaker is controlled based on the at least one shifted audio signal.

Various techniques are based on the finding that the frequency range that creates a sensory experience in an audio signal, e.g. at a live concert, tends to be wider than the usable frequency range of a tactile speaker integrated into the seat. The usable frequency range of a tactile speaker is therefore limited and does not utilise the upper bass range that can enhance a "live" experience. In the following, the usable frequency range of a tactile speaker can be considered as the frequency range for which the tactile speaker is designed and in which the tactile speaker is configured to produce physical sensations. In the following, the usable frequency range is also referred to as the nominal frequency range.

The defined frequency band may extend at least partially beyond the usable frequency range of the tactile speaker. The defined frequency band may extend completely beyond the usable frequency range of the tactile speaker. By shifting these upper frequency ranges, i.e. frequency ranges above the usable frequency range of the tactile speaker, to lower frequency ranges, these frequencies may contribute to the sensory effects from the tactile speaker.

For example, a plurality of bandpass filters may be provided and the audio signal is input into each of the bandpass filters. Each bandpass filter has a specifically defined frequency band. The frequency bands of the different bandpass filters may be different. Thus, a plurality of bandpass filtered audio signals is generated. Each of the bandpass filtered audio signals is frequency shifted to a lower frequency range. Specifically, each bandpass filtered audio signal is shifted such that the corresponding shifted audio signal falls at least partially or completely into the usable frequency range of the tactile speaker. Thus, frequencies in the audio signal above the usable frequency range of the tactile speaker can contribute to the output of the tactile speaker such that the sensory experience from the tactile speaker can be improved.

According to various examples, generating the at least one filtered audio signal comprises generating a first filtered audio signal with a first bandpass filter having a first frequency band, and generating a second filtered audio signal with a second bandpass filter having a second frequency band. The frequencies contained in the second frequency band are higher than the frequencies in the first frequency band. Generating the at least one shifted audio signal comprises generating a first shifted audio signal based on the first filtered audio signal that is shifted to a first shifted frequency, and generating a second shifted audio signal based on the second filtered audio signal that is shifted to a second shifted frequency that is higher than the first shifted frequency. In other words, the second filtered audio signal covers a higher frequency band than the first filtered audio signal. The frequency bands of the first and second filtered audio signals can overlap, be adjacent to each other or be separated in the frequency domain. Both the first filtered audio signal and the second filtered audio signal can be at least partially shifted into a usable frequency range of the tactile speaker. In the usable frequency range of the tactile speaker, the second shifted audio signal covers a higher frequency band than the first shifted audio signal. The frequency bands of the first and second shifted audio signals can overlap, be adjacent to each other or be separated in the frequency domain. For controlling the tactile speaker, the first shifted audio signal and the second shifted audio signal are combined in an adder to form a combined audio signal, and the tactile speaker is controlled based on the combined audio signal. So, even across the entirety of the several defined bandpass filters, higher frequencies of the audio signal contribute more to the generation of higher frequencies at the tactile speaker than lower frequencies. Lower frequencies of the audio signal contribute more to the generation of lower frequencies at the tactile speaker than higher frequencies. This may result in a more realistic experience of the physical vibrations of the tactile speaker.

According to various examples, generating the at least one filtered audio signal comprises generating a first filtered audio signal with a first bandpass filter having a first frequency band, and generating a second filtered audio signal with a second bandpass filter having a second frequency band. The frequencies contained in the second frequency band are higher than the frequencies in the first frequency band. Generating the at least one shifted audio signal comprises generating a first shifted audio signal by shifting the first filtered audio signal by a first shift frequency and generating a second shifted audio signal by shifting the second filtered audio signal by a second shift frequency. The first shift frequency depends on the first frequency band, and the second shift frequency depends on the second frequency band. For example, the first shift frequency is selected to shift a centre frequency of the first frequency band down one octave. Similarly, the second shift frequency can be selected to shift a centre frequency of the second frequency band down one octave. The first shifted audio signal and the second shifted audio signal may be combined in an adder to form a combined audio signal. The tactile speaker may be controlled based on the combined audio signal. In other words, a specific filtered audio signal from one of the bandpass filters is shifted with a single specific shift frequency. Shifting a (filtered) audio signal by a single shift frequency may be done quickly and with little effort. Various techniques are based on the finding that the physical vibrations from the tactile speaker are experienced more naturally and harmonic when the upper frequencies are shifted down one octave. However, exact downshift by one octave of a whole frequency band requires extensive computational effort and introduces time delays. The exact downshift by one octave may require a complete frequency analysis of the filtered audio signal such that the frequency of each tone is halved. By splitting up the upper frequencies in several frequency bands and downshifting the audio signal within each frequency band by a single shift frequency shifting the frequencies of this band approximately by one octave down, may have nearly the same effect in perception as an exact downshift of each frequency within the frequency band by one octave. However, for achieving essentially the same effect in perception as the exact downshifting by one octave, each of the frequency bands should be significantly smaller than one octave, for example a third octave or even less.

The method may further comprise generating a further filtered audio signal by filtering the audio signal with a further bandpass filter having a defined frequency band. The further bandpass filter may have a defined frequency band which essentially corresponds to the frequency range that can be reproduced by the tactile speaker, i.e. the nominal frequency range of tactile speaker. For example the tactile speaker may have a nominal frequency range of 20 to 80 Hz and the further bandpass filter may have a frequency band of 20 to 80 Hz also. However, in other examples, the further bandpass filter may have a frequency band that only partially overlaps the frequency range of the tactile speaker, for example 10 to 50 Hz or 30 to 90 Hz. The further filtered audio signal is not frequency shifted and may be directly used for driving the tactile speaker. The further filtered audio signal and the at least one shifted audio signal may be combined in an adder to form a combined audio signal, and the tactile speaker may be controlled based on the combined audio signal.

According to various examples, at least one gated audio signal is generated by gating the at least one shifted audio signal depending on an amplitude of the at least one filtered audio signal. In other words, each shifted audio signal is separately gated. Gating may include switching the shifted audio signal on and off, or may include significantly attenuating the shifted audio signal to form the gated audio signal. The criterion for gating may be the amplitude of the corresponding filtered audio signal, i.e. the filtered audio signal before being frequency shifted. For example, the amplitude of the corresponding filtered audio signal may be compared with a threshold value, and the shifted audio signal is gated out when the amplitude is below the threshold. For example, the threshold may be a predefined audio level, for example 18 dB. If the amplitude of the corresponding filtered audio signal is above this threshold, the shifted audio signal is switched on. If the amplitude of the corresponding filtered audio signal is below this threshold, the shifted audio signal is switched off. In other examples, switching off may be implemented by significantly attenuating the shifted audio signal, for example by 80 dB, while switching on may be implementing by not attenuating the shifted audio signal. In some examples an envelope value of the amplitude of the corresponding filtered audio signal may be compared with a threshold value and the gating may be performed based on this comparison. In some examples, the gating may be implemented by modulating the shifted audio signal with an envelope curve of the corresponding filtered audio signal. The tactile speaker may be controlled based on the gated audio signals. Supplying the tactile speaker with the gated audio signals may contribute to maintain or emphasise transients or transient responses in the audio signal. It has been found that transients reproduced by the tactile speaker may improve the tactile experience. The above techniques enable that transients in higher frequencies above the frequency range of the tactile speaker may be shifted into the frequency range of the tactile speaker and maintained or even emphasised by the gating.

The defined frequency band of each of the bandpass filters may have a lower cutoff frequency and a higher cutoff frequency. A ratio of the higher cutoff frequency to the lower cutoff frequency may be less than 2, preferable less than 1.5, more preferable less than 1.25. In some examples, the ratio of the higher cutoff frequency to the lower cutoff frequency may be 1.259 (i.e. 1/3rd octave) or may be smaller, e.g., 1/6th octave. As discussed above, the frequency shifting may not be implemented as an exact shifting of each tone one octave down, but shifting all tones of the frequency band by the constant shift frequency. However, in order to achieve a natural and harmonious experience of the tactile output of the tactile speaker, the frequency bands involved should be small, significantly smaller than an octave, which can be achieved with the ratios of higher to lower cutoff frequencies identified above.

A value of a shift frequency for shifting the at least one filtered audio signal to the shifted frequency may be half of a specific frequency value between the lower cutoff frequency and the higher cutoff frequency of the corresponding defined frequency band. Thus, a tone having the specific frequency value is exactly shifted one octave down and tones having a frequency close by that specific frequency value are approximately shifted one octave down. In some examples, the specific frequency value is a centre frequency of the corresponding defined frequency band.

According to various examples, at least four filtered audio signals are generated. A total frequency range of the defined frequency bands assigned to the respective filtered audio signals is wider than a frequency range of the tactile speaker. For example, the frequency range of the tactile speaker may be 60 Hz (e.g. 20 to 80 Hz) and the four frequency bands of the four bandpass filters may cover a frequency range that is two, three or four times the frequency range of the tactile speaker. For example, the frequency range of the four bandpass filters may cover a frequency range from 100 Hz to 250 Hz. The four defined frequency bands of the four bandpass filters may not overlap each other. For example, a first bandpass filter may have a bandwidth from 100 Hz to 125 Hz, a second bandpass filter may have a bandwidth from 125 Hz to 160 Hz, a thirty bandpass filter may have a bandwidth from 160 Hz to 200 Hz, and a fourth bandpass filter may have a bandwidth from 200 Hz to 250 Hz.

A control circuit for controlling a tactile speaker comprises at least one interface for receiving an audio signal and coupling to the tactile speaker, and a processing unit. The processing unit may include, for example, a processor (CPU) and memory. Control instructions (software) may be stored in the memory and may cause the processor to perform the functions and methods described herein. The processing unit may comprise analogue circuits, for example filters, attenuators, modulators and amplifiers. The control circuit may be implemented in or as part of an audio equipment, e.g. a radio, a hi-fi system or an entertainment system of a vehicle. The at least one interface may comprise a first interface for receiving the audio signal and a second interface for coupling to and controlling the tactile speaker. However, the at least one interface may be a common interface for receiving the audio signal and controlling the tactile speaker, for example a digital bus interface coupled to an entertainment system of a vehicle. The audio signal may be received as analogue or digital signal. Similarly, the tactile speaker may be controlled via analogue or digital signals. The processing unit is configured to generate at least one filtered audio signal by filtering an audio signal received via the at least one interface with at least one bandpass filter having a defined frequency band. In other words, a plurality of filtered audio signals may be generated. Each of the filtered audio signals is generated by filtering the audio signal with a corresponding bandpass filter. The frequency bands (i.e. passbands) of the bandpass filters may be different such that different filtered audio signals are generated.

The processing unit is further configured to generate at least one shifted audio signal by frequency shifting the at least one filtered audio signal depending on the defined frequency band to a shifted frequency lower than a frequency of the defined frequency band. For example, a corresponding frequency shifter may be provided at an output of each bandpass filter. The frequency shifter is configured to shift the filtered audio signal to the lower frequency band. The lower frequency band may at least partially cover the usable frequency band of the tactile speaker.

In addition, the processing unit is configured to control the tactile speaker via the at least one interface based on the at least one shifted audio signal. For example, the shifted audio signals from the various frequency shifters may be combined, for example by an adder, and may be supplied to the tactile speaker.

The control circuit may further be configured to perform the method and the examples described above.

A tactile audio system comprises at least one tactile speaker for installation in a seat, for example in a vehicle, and the above control circuit.

According to various examples, the tactile audio system may comprise a first tactile speaker for installation in a seat surface of the seat, and a second tactile speaker for installation in a backrest of the seat. The control circuit may control the first tactile speaker as described in the method above based on a combination of the at least one shifted audio signal and the further filtered audio signal. The control circuit may control the second tactile speaker as described in the method above based on a combination of the shifted audio signals only. The seat is therefore excited by the lower frequencies that fall directly within the usable frequency range of the first tactile speaker and by the upper frequencies that are shifted into the usable frequency range of the first tactile speaker. The backrest is only excited by the upper frequencies that are shifted into the usable frequency range of the second tactile speaker.

A vehicle, for example a car, truck, ship or aircraft, may comprise at least one seat and the above described tactile audio system with the tactile speaker installed in the seat.

It should be understood that the above summary is provided to introduce in simplified form a selection of concepts that are further described in the detailed description. It is not intended to identify key or essential features of the claimed subject matter, the scope of which is uniquely defined by the claims that follow the detailed description. Further, the claimed subject matter is not limited to implementations that solve any of the disadvantages noted above or in any part of this disclosure.

### Brief description of the Drawings

The above and other aspects and embodiments, advantageous modifications, further improvements, elements, features, steps and characteristics of the present disclosure will become more apparent from the following detailed description of exemplary embodiments and the accompanying figures. Unless otherwise indicated or the context otherwise requires, like reference signs refer to corresponding elements or features of the exemplary embodiments and throughout the figures.
Fig. 1 schematically illustrates a vehicle according to one or more embodiments.
Fig. 2 is a flowchart of a method of controlling a tactile speaker according to one or more embodiments.
Fig. 3 schematically illustrates functional blocks of a control circuit for controlling a tactile speaker according to one or more embodiments.
Fig. 4 schematically illustrates functional blocks of a control circuit for controlling a tactile speaker according to one or more further embodiments.

### Detailed description

Various embodiments are described in detail below with reference to the accompanying figures. It is to be understood that the following description of embodiments is not to be understood in a limiting sense. The scope of the disclosure is not intended to be limited by the embodiments described below or by the figures, which are intended to be illustrative only.

The figures are to be regarded as schematic representations and the elements shown in the figures are not necessarily shown to scale. Rather, the various elements are shown such that their function and general purpose will be apparent to a person skilled in the art. Any connection or coupling between functional blocks, devices, components or other physical or functional units shown in the figures or described herein may also be implemented by indirect connection or coupling. Coupling between components may be accomplished via a wireless connection. Functional blocks may be implemented in hardware, firmware, software, or a combination thereof. Same reference signs in the various figures referred to similar or identical components.

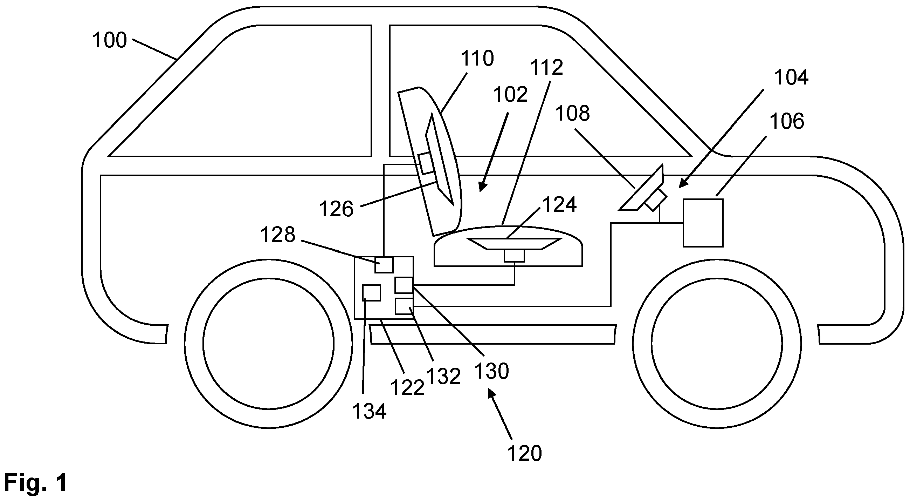

Fig. 1 illustrates a vehicle 100, such as a car. However, the techniques disclosed herein are not limited to automobiles, but may be applied to other types of vehicles, such as trucks, ships, trains, airplanes, or motorcycles, and the techniques disclosed herein may also be applied to other environments where tactile speakers are used in seats or chairs, such as at home, in a theatre, or in a cinema. The vehicle 100 includes, among other things, one or more seats 102 for a driver and passengers, and a sound system 104.

The sound system 104 may comprise an audio source 106, for example a radio or entertainment system, and one or more audio loudspeakers 108 coupled to the audio source 106 for reproducing audio signals from the audio source 106 as acoustic waves.

Each seat 102 may comprise a seat surface 112 and a backrest 110.

In addition, the vehicle comprises a tactile audio system 120 that creates physical vibrations in the seat 102. A driver or passenger sitting on the seat 102 can feel the vibrations by touch. The tactile audio system 120 comprises a control circuit 122 and one or more tactile speakers. In the example illustrated in Fig. 1, the tactile audio system 120 comprises two tactile speakers 124 and 126. The tactile speaker 124 is arranged below the seat surface 112 of the seat 102, and the tactile speaker 126 is arranged in the backrest 110. In some examples, only one tactile speaker may be provided either below the seat surface 112 or in the backrest 110. In further examples, more than two tactile speakers may be provided in the seat 102, for example two tactile speakers below the seat surface 112 and two tactile speakers in the backrest. Further tactile speakers may be arranged at other positions in the vehicle that can come into contact with the driver or passenger. For example, a further tactile speaker may be arranged in the floor of the legroom.

The control circuit 122 controls the tactile speakers 124 and 126 via interfaces 128 and 130, respectively. The control circuit 122 has a further interface 132 for receiving an audio signal from the audio source 106. The audio signal from the audio source 106 may be the same or may essentially correspond to the audio signal that is output via the one or more audio loudspeakers 108. In order to achieve a natural and harmonious experience of the acoustic and tactile outputs of the audio loudspeakers 108 and the tactile speakers 124, 126, these outputs should be synchronised, i.e. any delay between these outputs should be avoided or minimised.

Typically, the audio signal from the audio source 106 is filtered with a bandpass filter having substantially a passband corresponding to the usable frequency range, i.e. the nominal frequency range, of the tactile speakers 124, 126. It has been found that filtering is advantageous because frequencies above the nominal frequency range of the tactile speaker can induce unwanted vibrations, sometimes perceived as tickling or prickling. On the other hand, it has been found that the frequency range that creates a tactile impression in a live venue tends to be wider than the nominal frequency range of a tactile speaker. The frequency range used by a tactile speaker may therefore be limited by the reproduction system and does not use the upper bass content that would be required for a 'live' experience. Thus, including a tactile impression, e.g. vibrations, in response to frequencies higher than the nominal frequency range of the tactile speaker may enhance the tactile experience. Taking this into account, the control circuit 122 may not only provide the audio signal passband filtered to the tactile speakers, but may also include frequencies above the nominal frequency range of the tactile speakers for controlling the tactile speakers.

The control circuit 122 may include a processing unit 134 comprising example a processor, e.g. a central processing unit (CPU), and memory. Control instructions (software) may be stored in the memory and may cause the processor to perform the functions and methods described herein. As used herein, "processing unit" may include a data processor, such as a microprocessor or digital signal processor (DSP), or any other means adapted to process data, particularly digital audio data. The data may be processed digitally. Additionally or as an alternative, the processing unit 134 may include electrical and electronic components for analogue processing analogue audio signals, for example filter circuits and amplifiers.

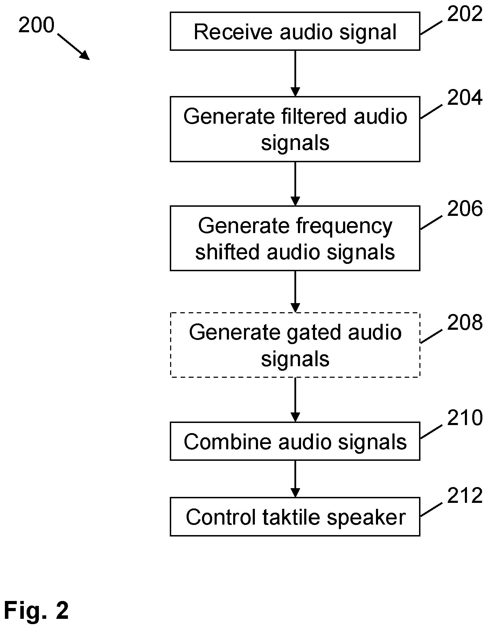

For example, the control circuit 122 may be configured to perform the method 200 illustrated in Fig. 2. The method 200 comprises method steps 202 to 212. In step 202, an audio signal is received, for example via the interface 132 from the audio source 106. The audio signal may contain for example in music, speech or sound effects.

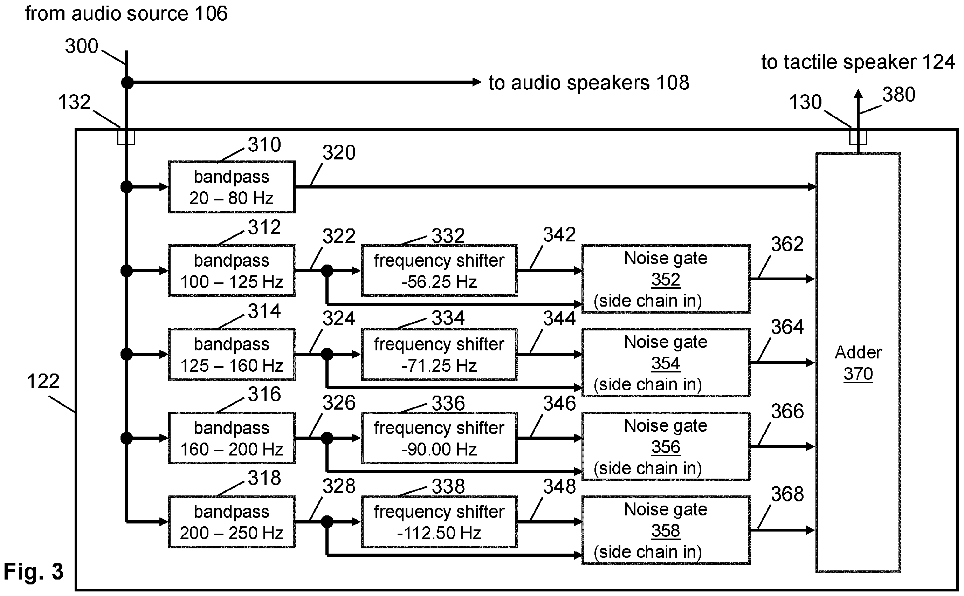

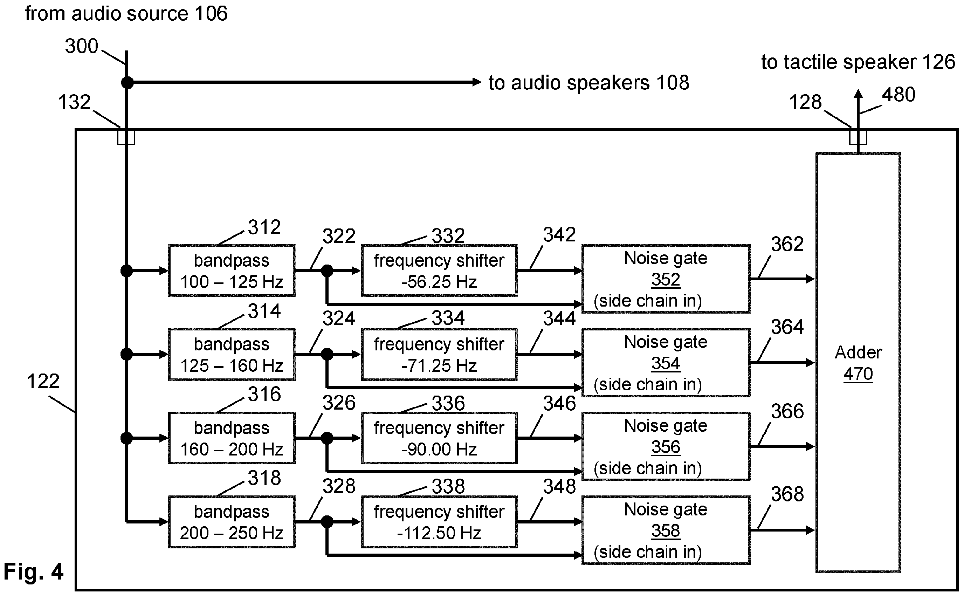

In step 204, the control circuit 122 filters the audio signal with various bandpass filters, thus generating a plurality of filtered audio signals. In addition, as illustrated in Fig. 1, the audio signal from the audio source 106 may be fed to the audio loudspeaker 108 that provides an audio reproduction. The plurality of bandpass filters extract several "frequency slices" of the audio signal which are further processed for the tactile speakers 124, 126. Each "frequency slice" comprises a defined frequency band. A first bandpass filter with a passband of for example 20 Hz to 80 Hz may generate a first filtered audio signal that can be directly used for controlling the tactile speakers 124, 126. Other bandpass filters may extract small frequency bands of the received audio signal with frequencies above the nominal frequency range of the tactile speakers 124, 126, for example with frequencies above 80 Hz or above 100 Hz. Exemplary passbands of these bandpass filters will be discussed below in connection with Figs. 3 and 4. As a result, a plurality of filtered audio signals is generated.

In step 206, the filtered audio signals from the "other" bandpass filters (i.e. not the first bandpass filter) are frequency shifted. I.e., the filtered audio signals having frequencies above the nominal frequency range of the tactile speakers 124, 126 are frequency shifted to a shifted frequency lower than the frequency of the corresponding bandpass filters. The thus generated frequency shifted audio signals may have a frequency range that falls in the nominal frequency range of the tactile speakers 124, 126, or that partially overlaps the nominal frequency range of the tactile speakers 124, 126.

The frequency shifted audio signals may be optionally gated in step 208 to generate gated audio signals. Gating may be accomplished for each frequency shifted audio signal by a corresponding noise gate or simply gate that is used to control the volume of the frequency shifted audio signal. The (noise) gate may have a threshold control to set the level at which the gate will open. The threshold control may receive the filtered audio signal and compare the filtered audio signal or an envelope of the filtered audio signal with a threshold. Upon exceeding the threshold, the gate may open. Gating the frequency shifted audio signal and controlling the gate based on the filtered audio signal may increase impulse fidelity.

The gated audio signals may be combined in step 210. When the frequency shifted audio signals are not gated (step 208 is optional), the frequency shifted audio signals may be combined in step 210. For example, the gated/frequency shifted audio signals may be added in a time domain, for example by use of a digital or analogue adder. The above-mentioned first filtered audio signal generated by the first bandpass filter may also be combined with the gated/frequency shifted audio signals, for example by adding. Different combinations of the gated/frequency shifted audio signals and the first filtered audio signal may be generated for different tactile speakers.

In step 212, the tactile speakers are controlled based on the combined audio signals.

A more detailed example for controlling the tactile speaker 124 is illustrated in Fig. 3. Functional blocks shown in Fig. 3 may be included in and implemented by the control circuit 122. An audio signal 300 may be provided by the audio source 106. The audio signal 300 may be supplied to the audio loudspeakers 108 for outputting an audible signal. In addition, the audio signal 300 may be received at the interface 132 of the control circuit 122. The audio signal 300 may be supplied to a bank of bandpass filters 310 to 318. Each bandpass filter has a defined passband. For example, a first bandpass filter 310 may have a passband from 20 to 80 Hz, a second bandpass filter 312 may have passband from 100 to 125 Hz, a third bandpass filter 314 may have passband from 125 to 160 Hz, a fourth bandpass filter 316 may have passband from 160 to 200 Hz, and a fifth bandpass filter 318 may have passband from 200 to 250 Hz. Thus, each bandpass filter 310 to 318 generates a corresponding passband filtered audio signal 320 to 328. The filtered audio signal 320 from bandpass filter 310 comprises frequencies that may be directly reproduced by the tactile speaker 124. The filtered audio signals 322 to 328 may comprise frequencies outside the nominal frequency range of the tactile speaker 124. The nominal frequency range of the tactile speaker 124 may be 20 to 100 Hz.

The filtered audio signals 322 to 328 are each individually frequency shifted by the frequency shifters 332 to 338. Each of the frequency shifters 332 to 338 may be configured to shift down the frequencies of the assigned filtered audio signal by a shift frequency of half of a centre frequency of the corresponding bandpass filter. Thus, the centre frequency of the corresponding bandpass filter is shifted one octave down. In the illustrated example, the frequency shifter 332 has a shift frequency of -56.25 Hz for shifting down the filtered audio signal 322 to produce a shifted audio signal 342 comprising a frequency range of 43.75 to 68.75 Hz. The frequency shifter 334 has a shift frequency of -71.25 Hz for shifting down the filtered audio signal 324 to produce a shifted audio signal 344 comprising a frequency range of 53.75 to 88.75 Hz. The frequency shifter 336 has a shift frequency of -90 Hz for shifting down the filtered audio signal 326 to produce a shifted audio signal 346 comprising a frequency range of 70 to 110 Hz. The frequency shifter 338 has a shift frequency of -112.5 Hz for shifting down the filtered audio signal 328 to produce a shifted audio signal 348 comprising a frequency range of 87.5 to 137,5 Hz. As a result, the shifted audio signals 342 to 348 comprise frequencies that fall at least partially in the nominal frequency range of the tactile speaker 124.

The frequency shifted audio signals 342 to 348 are then each supplied to a corresponding noise gate 352 to 358. Each noise gate 352 to 358 receives one of the frequency shifted audio signals 342 to 348 and the corresponding filtered audio signal 322 to 328. Each of the noise gates 352 to 358 opens, i.e. the corresponding frequency shifted audio signal 342 to 348 is passed through the noise gate 352 to 358, when a level of the corresponding filtered audio signal 322 to 328 exceeds a predefined threshold. The level of the corresponding filtered audio signal 322 to 328 may be for example a value of the amplitude of the filtered audio signal 322 to 328 or a value of an envelope of the the filtered audio signal 322 to 328. Thus, each gated audio signal 362 to 368 is either zero when the level of the corresponding filtered audio signal 322 to 328 is below the threshold, or corresponds to the frequency shifted audio signal 342 to 348 when the level of the corresponding filtered audio signal 322 to 328 exceeds the threshold. For example, the gated audio signal 362 is zero when the level of the filtered audio signal 322 is below the threshold. The gated audio signal 362 is the frequency shifted audio signal 342 passed through the noise gate 352 when the level of the filtered audio signal 322 exceeds the threshold. A typical threshold value may be in a range of 16 to 25 dB, for example 18 dB, which means that the filtered audio signal 322 to 328 has significant volume above noise.

The gated audio signals 362 to 368 and the filtered audio signal 320 are then combined in an adder 370 to generate the combined audio signal 380. The combined audio signal 380 is output via the interface 130 to the tactile speaker 124.

In summary, the concept is to create a very responsive, low latency type of pitch shifter which shifts higher bass signals by one octave lower. The frequency shifter outputs are gated by a side chained noise gate. The noise gate outputs 362 to 368 and the filtered audio signal 320 from the first bandpass filter 310 are summed and provided to the tactile speaker 124. As a result, the low bass content from 20 Hz to 80 Hz is feed directly into the tactile speaker 124. Higher bass from 100 Hz to 250 Hz is pitch shifted one octave lower with low latency and is also feed into the tactile speaker 124. Low latency is achieved by frequency shifting which can be performed with high speed at low cost. Gating prevents the tactile speaker 124 from being excited by lower level audio components, which may be perceived as an unpleasant tickling or prickling sensation. In addition, gating may improve impulse accuracy for higher level audio components.

A further example for controlling the tactile speaker 126 is illustrated in Fig. 4. Functional blocks shown in Fig. 4 may be implemented by the control circuit 122. Some functional blocks, in particular those already described in connection with Fig. 3, may be shared with the example described above for controlling the tactile speaker 124. As in the example of Fig. 3, the audio signal 300 may be received from the audio source 106 at the interface 132 of the control circuit 122. The audio signal 300 may be supplied to a bank of bandpass filters 312 to 318. Each bandpass filter has a defined passband. The defined passbands may be different. Thus, each bandpass filter 312 to 318 generates a corresponding passband filtered audio signal 322 to 328. The filtered audio signals 322 to 328 may comprise frequencies outside the nominal frequency range of the tactile speaker 126. The filtered audio signals 322 to 328 are each individually frequency shifted by the frequency shifters 332 to 338. Each of the frequency shifters 332 to 338 may be configured to shift down the frequencies of the assigned filtered audio signal 322 to 328 by a shift frequency of half of a centre frequency of the corresponding bandpass filter. Thus, the centre frequency of the corresponding bandpass filter is shifted one octave down. As a result, the shifted audio signals 342 to 348 comprise frequencies that fall at least partially in the nominal frequency range of the tactile speaker 126.

The frequency shifted audio signals 342 to 348 are then each supplied to a corresponding noise gate 352 to 358. Each noise gate 352 to 358 receives one of the frequency shifted audio signals 342 to 348 and the corresponding filtered audio signal 322 to 328. The noise gates 352 to 358 form gated audio signals 362 to 368 as described above in connection with Fig. 3.

The gated audio signals 362 to 368 are then combined in an adder 470 to generate the combined audio signal 480. The combined audio signal 480 is output of via the interface 128 the tactile speaker 126.

In summary, the noise gate outputs are summed and provided to the tactile speaker 126 in the backrest 110, whereas the noise gate outputs and additionally the filtered audio signal 320 from the first bandpass filter 310 are summed and provided to the tactile speaker 124 in the seat surface 112. As a result, the low bass content from 20 Hz to 80 Hz is feed directly into seat surface 112. Higher bass from 100 Hz to 250 Hz is pitch shifted one octave lower with low latency and is feed into the seat surface 112 and the backrest 110.

It has been found that tactile support of the audio output in both the backrest 110 and the seat surface 112 is perceived as pleasant and beneficial. However, very strong tactile effects, which can be caused in particular by low frequencies in the audio signal, can be perceived as unpleasant in the backrest area. The different control of the tactile speakers 124 and 126 in the seat surface 112 and backrest 110 described above takes this finding into account. However, it is clear that other implementations are possible. For example, both the tactile speaker 124 in the seat surface 112 and the tactile speaker 126 in the backrest 110 may be controlled with the same combined audio signal, either combined audio signal 380 or combined audio signal 480. Furthermore, the above number of four or five bandpass filters is only an example and any other number of bandpass filters with corresponding frequency shifters and noise gates may be implemented, for example only two or three bandpass filters or more than five bandpass filters, for example seven to ten. Also, the frequency range covered by the bandpass filters may be varied and the passband of the bandpass filters may be adjoined, overlapping or spaced from each other.

## Claims

1. A method of controlling a tactile speaker, the method (200) comprising at a control circuit (122):
- receiving (202) an audio signal (300),
- generating (204) at least one filtered audio signal (320-328) by filtering the audio signal (300) with at least one bandpass filter (310-318) having a defined frequency band, and
- generating (206) at least one shifted audio signal (342-348) by frequency shifting the at least one filtered audio signal (322-318) depending on the defined frequency band to a shifted frequency lower than a frequency of the defined frequency band, and
- controlling (212) the tactile speaker (124, 126) based on the at least one shifted audio signal (342-348).

2. The method of claim 1, wherein generating (204) the at least one filtered audio signal (322-328) comprises:
- generating (204) a first filtered audio signal (322) with a first bandpass filter (312) having a first frequency band,
- generating (204) a second filtered audio signal (334) with a second bandpass filter (314) having a second frequency band, wherein the frequencies contained in the second frequency band are higher than the frequencies in the first frequency band,
wherein generating (206) the at least one shifted audio signal (342-348) comprises:
- generating (206), based on the first filtered audio signal (322), a first shifted audio signal (342) shifted to a first shifted frequency,
- generating (206), based on the second filtered audio signal (324), a second shifted audio signal (344) shifted to a second shifted frequency higher than the first shifted frequency,
wherein controlling (212) the tactile speaker (124, 126) comprises:
- combining (210) the first shifted audio signal (342) and the second shifted audio signal (344) in an adder (370, 470) to a combined audio signal (380, 480), and
- controlling (212) the tactile speaker (124, 126) based on the combined audio signal (380, 480).

3. The method of claim 1, wherein generating (204) the at least one filtered audio signal (322-328) comprises:
- generating (204) a first filtered audio signal (322) with a first bandpass filter (312) having a first frequency band,
- generating (204) a second filtered audio signal (324) with a second bandpass filter (314) having a second frequency band, wherein the frequencies contained in the second frequency band are higher than the frequencies in the first frequency band,
wherein generating (206) the at least one shifted audio signal (342-348) comprises:
- generating (206), based on the first filtered audio signal (322), a first shifted audio signal (342) shifted by a first shift frequency,
- generating (206), based on the second filtered audio signal (324), a second shifted audio signal (344) shifted by a second shift frequency higher than the first shift frequency,
wherein controlling (212) the tactile speaker (124, 126) comprises:
- combining (210) the first shifted audio signal (342) and the second shifted audio signal (344) in an adder (370, 470) to a combined audio signal (380, 480), and
- controlling (212) the tactile speaker (124, 126) based on the combined audio signal (380, 480).

4. The method of any one of the preceding claims, wherein the method (200) further comprises:
- generating (204) a further filtered audio signal (320) by filtering the audio signal (300) with a further bandpass filter (310) having a defined frequency band,
wherein controlling (212) the tactile speaker (124) comprises:
- combining (210) the at least one shifted audio signal (342-348) and the further filtered audio signal (320) in an adder (370) to a combined audio signal (380), and
- controlling (212) the tactile speaker (124) based on the combined audio signal (380).

5. The method of any one of the preceding claims, wherein the method (200) further comprises:
- generating (208) at least one gated audio signal (362-368) by gating the at least one shifted audio signal (342-348) depending on an amplitude of the at least one filtered audio signal (322-328),
wherein controlling (212) the tactile speaker (124, 126) comprises:
- controlling (212) the tactile speaker (124, 126) based on the at least one gated audio signal (362-368).

6. The method of claim 5, wherein generating (208) the at least one gated audio signal (362-368) comprises:
- comparing the amplitude of the at least one filtered audio signal (322-328) with a threshold value, and
- gating out the at least one shifted audio signal (342-348) when the amplitude of the at least one filtered audio signal (322-328) is below the threshold value.

7. The method of claim 5, wherein generating (208) the at least one gated audio signal (362-368) comprises:
- comparing an envelope value of the amplitude of the at least one filtered audio signal (322-328) with a threshold value, and
- gating out the at least one shifted audio signal (342-348) when the envelope value is below the threshold value.

8. The method of claim 5, wherein generating (208) the at least one gated audio signal (362-368) comprises:
- modulating the at least one shifted audio signal (342-348) with an envelope curve of the at least one filtered audio signal (322-328).

9. The method of any one of the preceding claims, wherein the defined frequency band has a lower cutoff frequency and a higher cutoff frequency, wherein a ratio of the higher cutoff frequency to the lower cutoff frequency is less than 2, preferable less than 1.5, more preferable less than 1.25.

10. The method of any one of the preceding claims, wherein the defined frequency band has a lower cutoff frequency and a higher cutoff frequency, wherein a value of a shift frequency for shifting the at least one filtered audio signal to the shifted frequency is half of a frequency value between the lower cutoff frequency and the higher cutoff frequency.

11. The method of any one of the preceding claims, wherein generating (204) the at least one filtered audio signal (322-328) comprises generating (204) at least four filtered audio signals (322-328), wherein a total frequency range of the defined frequency bands assigned to the respective filtered audio signals (322-328) is wider than a frequency range of the tactile speaker (124, 126), wherein the defined frequency bands preferable do not overlap each other.

12. A control circuit for controlling a tactile speaker, comprising:
- at least one interface (128, 130, 132) for receiving an audio signal (300) and coupling to the tactile speaker (124, 126), and
- a processing unit (134) configured to
- generate (204) at least one filtered audio signal (320-328) by filtering the audio signal (300) received via the at least one interface (132) with at least one bandpass filter (310-318) having a defined frequency band, and
- generate (206) at least one shifted audio signal (342-348) by frequency shifting the at least one filtered audio signal (322-328) depending on the defined frequency band to a shifted frequency lower than a frequency of the defined frequency band, and
- control (212) the tactile speaker (124, 126) via the at least one interface (130, 128) based on the at least one shifted audio signal (342-348).

13. The control circuit of claim 12, wherein the control circuit (122) is configured to perform the method of any one of claims 2-11.

14. A tactile audio system, comprising:
at least one tactile speaker (124, 126) for installation in a seat (102), and
the control circuit (120) of claim 12 or claim 13.

15. The tactile audio system of claim 14, comprising:
a first tactile speaker (124) for installation in a seat surface (112) of the seat (102), and
a second tactile (126) speaker for installation in a backrest (110) of the seat (102),
wherein the control circuit (122) controls the first tactile speaker (124) according to the method of claim 4, and
wherein the control circuit (122) controls the second tactile speaker (126) according to the method of claim 2 or claim 3.
